# EUROPEAN PATENT APPLICATION

(11) **EP 3 296 848 A1**
(43) Date of publication of application: **21.03.2018**
(21) Application number: 16792922.3
(22) Date of filing: 09.05.2016
(51) Int. Cl.: G06F 3/048

(54) **ELECTRONIC DEVICE AND METHOD FOR PROVIDING GRAPHIC USER INTERFACE THEREFOR**

(30) Priority: 12.05.2015 KR 20150065838
(71) Applicant: Samsung Electronics Co., Ltd., Suwon-si, Gyeonggi-do 16677 (KR)
(72) Inventor: POPOV, Artem, Kyiv 03148 (UA); KULAKOV, Oleksii, Kyiv 02068 (UA); FISUNENKO, Andrey, Kherson 73034 (UA); SHEVCHENKO, Elizabeth, Kharkov 61098 (UA); SOLONETSKYI, Kostiantyn, Kharkiv 61183 (UA); SOLYANKO, Mykola, Kobelyaky city Poltavska Oblast 39200 (UA); TOMYLKO, Viacheslav, Chernighiv 14017 (UA)
(74) Representative: HGF Limited
(86) International application number: PCT/KR2016/004781
(87) International publication number: WO 2016/182276

(57) **Abstract**

Electronic device according to various embodiments of the present invention comprise: multiple hardware modules comprising a display; and a processor for recognizing, as user context information, at least one of information provided by an external device, information obtained by the multiple hardware modules, and information provided by a user, for configuring a graphic user interface (GUI) for the electronic device on the basis of the user context information, and for displaying the GUI on the display.

## Description

### TECHNICAL FIELD

Various embodiments of the present invention relate to an electronic device providing a differentiated graphic user interface and, more particularly, to an electronic device providing a graphic user interface suitable for a user by analyzing a user state and a method for providing a graphic user interface therefor.

### BACKGROUND ART

As the number of users of electronic devices increases gradually and the technology for the electronic devices develops, the users desire to have characterful electronic devices suitable for their own personalities and preferences. Accordingly, the users of the electronic devices perform various modifications by using various materials such as changing a color of an electronic device and attaching an accessory to an electronic device. Further, as well as the appearance modifications of the electronic devices, the users of the electronic devices desire to have differentiated graphic user interfaces (GUIs) that respond to their own personalities.

### DISCLOSURE

### TECHNICAL PROBLEM

A graphic user interface of an electronic device is generally predetermined in the process of manufacturing the electronic device, and there may be problems because the types and configurations of graphic user interfaces provided by the electronic device are extremely limited.

The present invention can provide a graphic user interface for a user by analyzing a user state and configuring a differentiated graphic interface by various methods based on the analyzed user state.

### TECHNICAL SOLUTION

A method for providing a graphic user interface (GUI) in an electronic device according to various embodiments of the present invention may comprise the operations of identifying, as user context information, at least one of information provided by an external device, information obtained by a plurality of hardware modules, and information provided by a user; configuring the GUI of the electronic device based on the user context information; and displaying the GUI through a display.

An electronic device according to various embodiments of the present invention may comprise a plurality of hardware modules including a display and a processor configured to display a graphic user interface (GUI) in the display by recognizing, as user context information, at least one of information provided by an external device, information obtained by the plurality of hardware modules, and information provided by a user and by configuring the GUI of the electronic device based on the user context information

### ADVANTAGEOUS EFFECTS

A method for providing a graphic user interface in an electronic device according to various embodiments of the present invention can support a differentiated graphic user interface suitable for a user's demand by considering various user situations, and the user can use an appropriate graphic user interface suitable for the current situation.

### DESCRIPTION OF DRAWINGS

Figure 1 illustrates a network environment including an electronic device according to various embodiments of the present invention.
Figure 2 is a block diagram illustrating a configuration of an electronic device according to various embodiments of the present invention.
Figure. 3 is a flowchart illustrating an operation of providing a graphic user interface for a user according to various embodiments of the present invention.
Figure 4a illustrates an operation of receiving user context information from an external device by an electronic device according to various embodiments of the present invention.
Figure 4b illustrates an operation of obtaining user context information from a plurality of hardware modules in an electronic device according to various embodiments of the present invention.
Figure 5a illustrates an operation of identifying a rainy weather state and configuring a GUI based on the weather state in an electronic device according to various embodiments of the present invention.
Figure 5b illustrates an operation of identifying a stormy weather state and configuring a GUI based on the weather state in an electronic device according to various embodiments of the present invention.
Figure 5c illustrates an operation of identifying a user's jogging state and configuring a GUI based on the jogging state in an electronic device according to various embodiments of the present invention.

### MODE FOR INVENTION

Hereinafter, the present disclosure is described in detail with reference to the accompanying drawings. The present disclosure can be modified in various manners and may have various embodiments, and specific embodiments are illustrated in the drawings with detailed descriptions. However, it is not intended that the present disclosure are limited to the specific embodiments, and it is to be understood that all the modifications and/or equivalents falling within the spirit and scope of the present disclosure may be included. The same reference symbols are used throughout the drawings to refer the same or like pats.

The term "include" or "may include" used in the present disclosure indicates the existence of a corresponding function, operation, or component, and does not limit additional one or more functions, operations, or components. Further, the term "include" or "have" used in the present disclosure indicates the existence of a character, number, step, operation, component, or their combinations, and does not exclude the existence or possibility of adding one or more characters, steps, operations, components, or their combinations.

The term "or" used in the present disclosure indicates words listed together and all their combinations. For example, "A or B" may include A, B, or both of A and B.

The terms "first", "second", and "first or second" used in the present disclosure can qualify various components of the present disclosure, and does not limit the corresponding components. For example, the above terms do not limit the sequence and/or the importance of the corresponding components. The above terms can be used to distinguish one component from other components. For example, a first user device and a second user device may be different from each other; however, both of them may be used for one user. For example, without departing from the scope of the present disclosure, the first component can be named as the second component or the second component can be named as the first component vice versa.

The terms used in the present disclosure are simply for describing a specific embodiment, and they are not intended to limit the present disclosure. The expression of singular form may include the expression of plural form unless they are not clearly differentiated in a context.

Unless otherwise defined differently, all the terms including technical or scientific terms used in the present disclosure may have the same meaning generally understood by those skilled in the technical field of the present disclosure. Terms generally defined in an ordinary dictionary have the identical meanings in a technical context, and it should not be interpreted as an excessively formal meaning unless otherwise defined clearly in the present disclosure.

An electronic device according to the present disclosure may be a device configured to provide information for a user. For example, the electronic device may include at least one or combinations of various devices such as a smartphone, tablet personal computer (PC), mobile phone, video phone, e-book reader, desktop PC, laptop PC, netbook computer, personal digital assistant (PDA), portable multimedia player (PMP), MP3 player, mobile medical device, electronic bracelet, electronic necklace, electronic appcessory, camera, wearable device, electronic clock, wrist watch, home appliance (e.g., refrigerator, air conditioner, vacuum cleaner, electric oven, microwave oven, washing machine, and air cleaner), artificial intelligence robot, TV, digital video disk (DVD) player, audio equipment, various medical equipment (e.g., magnetic resonance angiography (MRA) scanner, magnetic resonance imaging (MRI) scanner, computed tomography (CT) scanner, movie camera, and ultrasonic device), navigation device, global positioning system (GPS) receiver, event data recorder (EDR), flight data recorder (FDR), set-top box, TV box (e.g., Samsung HomeSync, Apple TV, or Google TV), electronic dictionary, automobile infotainment device, electronic equipment for ship (e.g., navigation device for ship device and gyro compass), avionics, security equipment, electronic clothing, electronic key, camcorder, game consoles, head-mounted display (HMD), flat panel display device, electronic picture frame, electronic album, furniture and part of building/structure having a communication function, electronic board, electronic signature receiving device, or projector. It will be clear to those skilled in the art that the electronic device according to the present disclosure is not limited to the aforementioned equipment.

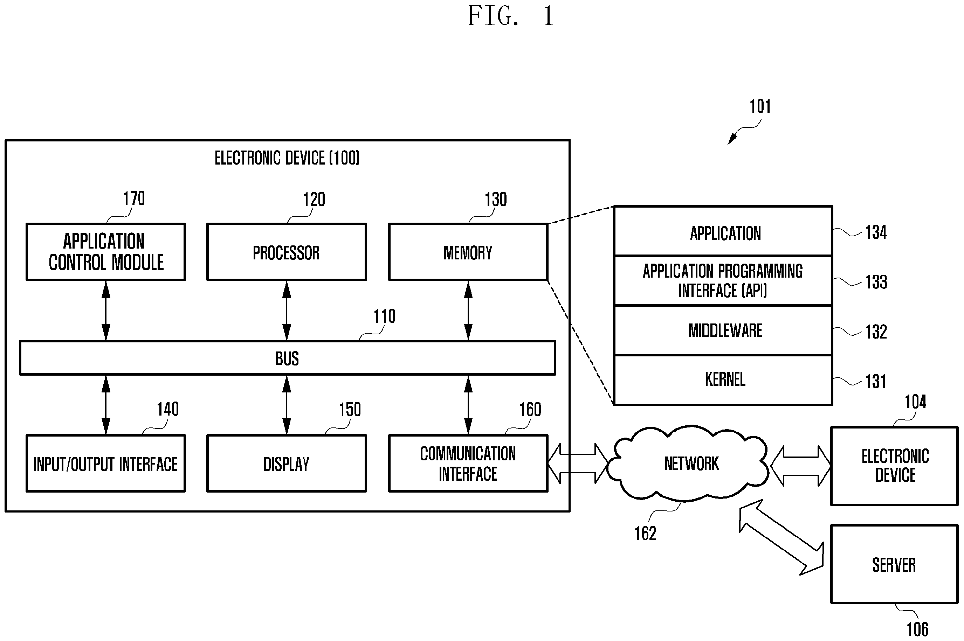

Figure 1 illustrates a network environment 101 including an electronic device 100 according to an embodiment of the present disclosure.

With reference to Figure 1, the electronic device 100 may include a bus 110, processor 120, memory 130, input/output interface 140, display 150, communication interface 160, and application control module 170.

The bus 110 may be a circuit for transmitting communication data (e.g., control message) by connecting the above components to each other.

The processor 120 can receive a command from other components (e.g., memory 130, input/output interface 140, display 150, communication interface 160, and application control module 170) through the bus 110, interpret the received command, and perform a calculation or data processing according to the interpreted command.

The memory 130 can store commands and data received from or generated by the processor 120 or other components (e.g., input/output interface 140, display 150, communication interface 160, and application control module 170). The memory 130 may include programming modules such as a kernel 131, middleware 132, application programming interface (API) 133, or application 134. Each programming module may be configured with software, firmware, hardware, or their combinations.

The kernel 131 can control or manage system resources (e.g., bus 110, processor 120, or memory 130) used for executing operations or functions provided by other programming modules, middleware 132, API 133, or application 134. Further, the kernel 131 provides an interface for controlling or managing the middleware 132, API 133, or application 134 so that they can access to each component of the electronic device 100.

The middleware 132 can play the role of mediation so that the API 133 or application 134 can communicate with the kernel 131 in order to send or receive data. Further, the middleware 132 can control task requests received from the application 134 (e.g., scheduling or load balancing), for example, by assigning the priority to at least one application 134 in using the system resources (e.g., bus 110, processor 120 or memory 130) of the electronic device 100.

The API 133 is an interface used by the application 134 in order to control functions provided by the kernel 131 or middleware 132, and it may include at least one interface or function (e.g., command) for controlling a file, window, image, or character.

According to various embodiments, the application 134 may include an SMS/MMS application, email application, calendar application, notification application, health care application (e.g., application for measuring an exercise amount or blood sugar amount), or environmental information application (e.g., application for providing atmospheric pressure, humidity, or temperature information). Additionally or substitutively, the application 134 can be an application related to an information exchange between the electronic device 100 and an external electronic device (e.g., electronic device 104). The information related to an information exchange may include a notification relay application for transmitting specific information to the external electronic device or a device management application for controlling the external electronic device.

For example, the notification relay application may include a function for transmitting notification information generated by other applications (e.g., SMS/MMS application, email application, healthcare application, or environmental information application) of the electronic device 100 to an external electronic device (e.g., electronic device 104). Additionally or substitutively, the notification replay application can provide notification information for a user by receiving from the external electronic device (electronic device 104). The device management application can manage (install, delete, or update) at least one function of the external electronic device (e.g., electronic device 104) communicating with the electronic device 100 (e.g., function of turning on/off the external electronic device or some of its components, or a function of adjusting brightness or resolution of a display), an application operating in the external electronic device, or a service provided by the external electronic device (e.g., telephone service or message service).

According to various embodiments, the application 134 may include an application assigned according to an attribute (e.g., type of electronic device) of the external electronic device (e.g., electronic device 104). For example, if the external electronic device is an MP3 player, the application 134 may include an application related to playing music. Similarly, if the external electronic device is a mobile medical device, the application 134 may include an application related to healthcare. According to an embodiment, the application 134 may include at least one application assigned to the electronic device 100 or received from an external electronic device (e.g., server 106 or electronic device 104).

The input/output interface 140 can transmit commands or data received from a user through an input/output device (e.g., sensor, keyboard, or touch screen) to the processor 120, memory 130, communication interface 160, or application control module 170 through the bus 110. For example, the input/output interface 140 can transmit data received from a user through a touch screen to the processor 120. Further, the input/output interface 140 can output commands or data received from the processor 120, memory 130, communication interface 160, or application control module 170 to an input/output device (e.g., speaker or display) through the bus 110. For example, the input/output interface 140 can output voice data processed by the processor 120 to a user through a speaker.

The display 150 can output various types of information (e.g., multimedia data or text data) for a user.

The communication interface 160 can form a communication channel between the electronic device 100 and the external device (e.g., electronic device 104 or server 106). For example, the communication interface 160 can communicate with an external device by connecting through a wired or wireless communication network 162. The wireless communication may include at least one of a wireless fidelity (Wifi), Bluetooth (BT), near field communication (NFC), global positioning system (GPS), or cellular communication (e.g., LTE, LTE-A, CDMA, WCDMA, UMTS, Wibro, or GSM). The wired communication may include at least one of a universal serial bus (USB), high definition multimedia interface (HDMI), recommended standard 232 (RS-232), or plain old telecommunication service (POTS).

According to an embodiment, the network 162 can be a telecommunications network. The telecommunication network may include at least one of a computer network, internet, internet of things, or telephone network. According to an embodiment, a protocol (e.g., transport layer protocol, data link layer protocol, or physical layer protocol) between the electronic device 100 and the external device can be supported by at least one of the application 134, application programming interface 133, middleware 132, kernel 131, and communication interface 160.

The application control module 170 can process at least one part of information obtained from other components (e.g., processor 120, memory 130, input/output interface 140, or communication interface 160) and provide the process information for a user by various methods. For example, the application control module 170 can recognize information of a component connected to the electronic device 100, store the information of the connected component in the memory 130, and execute an application 134 according to the information of the connected component.

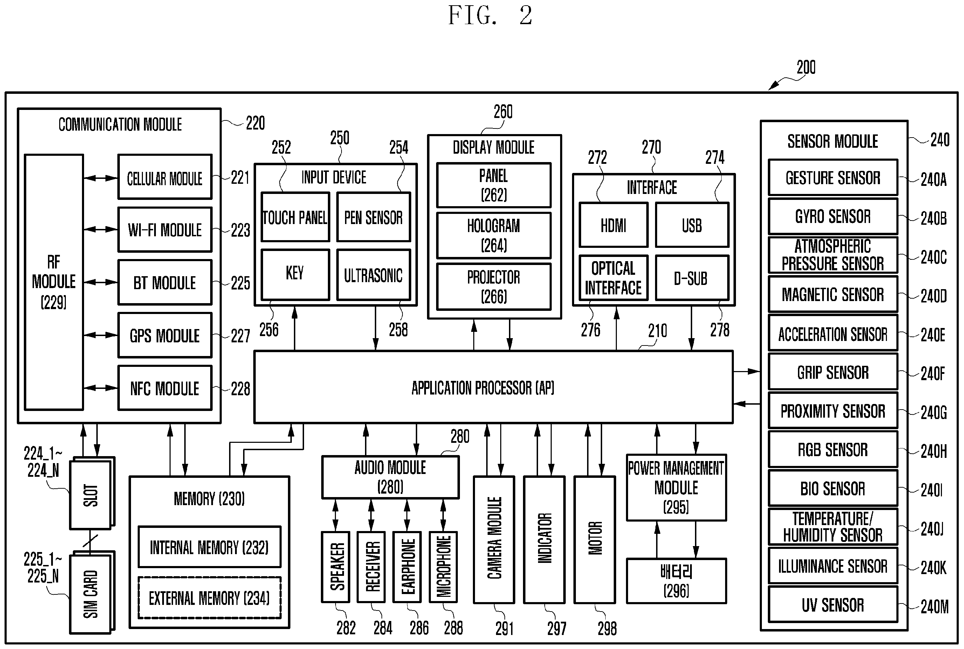

Figure 2 is a block diagram illustrating a configuration of an electronic device 200 according to various embodiments of the present disclosure. For example, the electronic device 200 may be configured with the whole or some parts of the electronic device 100 shown in Figure 1.

With reference to Figure 2, the electronic device 200 may include at least one application processor (AP) 210, communication module 220, subscribe identity module (SIM) card 224, memory 230, sensor module 240, input device 250, display 260, interface 270, audio module 280, camera module 291, power management module 295, battery 296, indicator 297, and motor 298.

The AP 210 can control a plurality of hardware or software components connected to the AP 210 by driving an operating system or an application program, and process and calculate data including multimedia data. For example, the AP 210 may be configured with a system on chip (SoC). According to an embodiment, the AP 210 may further include a graphic processing unit (GPU, not shown).

The processor 210 according to various embodiments of the present invention can recognize at least one of information provided by an external device information, information obtained by a plurality of hardware modules, and information provided by a user, as user context information. The user context information may be related to the current state of a user or the current situation of a user. The processor 210 can configure a graphic user interface (GUI) of the electronic device 200 based on the obtained user context information. The GUI can be configured with at least one of a background image, animation, icon, widget, character font, scroll, and soft key of the electronic device. The processor 210 can collect the user context information by using the plurality of hardware modules included in the electronic device 200. The processor 210 can identify the user state by analyzing the obtained user context information, and configure the GUI based on the identified user state. The processor 210 can identify the user state by analyzing pre-stored user context information and newly obtained user context information, and configure the GUI based on the identified user state. The processor 210 can obtain the user context information in predetermined time intervals and modify a configuration of the GUI based on the obtained user context information. The processor 210 can control transmission of user context information and GUI information configured based on the user context information to another electronic device.

The communication module 220 (e.g., communication interface 160) can perform data transmission and reception through a communication network formed between the electronic device 200 (e.g., electronic device 100 of Figure 1) and other electronic devices (e.g., electronic device 104 or server 106 of Figure 1). According to an embodiment, the communication module 220 may include a cellular module 221, Wifi module 223, BT module 225, GPS module 227, NFC module 228, and RF (Radio Frequency) module 229.

The cellular module 221 can provide voice communication, video communication, character service, or internet service through a communication network (e.g., LTE, LTE-A, CDMA, WCDMA, UMTS, WiBro, or GSM). For example, the cellular module 221 can perform distinction and authentication of an electronic device in a communication network by using a subscribe identity module (e.g., SIM card 224). According to an embodiment, the cellular module 221 can perform at least one part of functions provided by the AP 210. For example, the cellular module 221 can perform a part of a multimedia control function.

According to an embodiment, the cellular module 221 may include a communication processor (CP). For example, the cellular module 221 can be configured with a SoC. Although components such as a cellular module 221 (e.g., communication processor), memory 230, or power management module 295 are illustrated as separate components from the AP 210, according to an embodiment, the AP 210 can be configured to include at least one of the above components (e.g., cellular module 221).

According to an embodiment, the AP 210 or cellular module 221 (e.g., communication processor) can process commands or data received from at least one of a non-volatile memory or other components connected to each of them by loading into a volatile memory. Further, the AP 210 or cellular module 221 can store data received from or generated by at least one of other components in the non-volatile memory. The AP 210 and/or the cellular module 221 can be configured with the whole of some part of the processor 120 shown in Figure 1.

For example, each of the Wifi module 223, BT module 225, GPS module 227, and NFC module 228 can include a processor for processing data transmitted or received through the corresponding module.

Although each of the cellular module 221, Wifi module 223, BT module 225, GPS module 227, and NFC module 228 is shown in a separate block, according to an embodiment, at least one (e.g., 2 or more) of the cellular module 221, Wifi module 223, BT module 225, GPS module 227, and NFC module 228 can be integrated into an integrated chip (IC) or an IC package. For example, at least one of the processors corresponding to each of the cellular module 221, Wifi module 223, BT module 225, GPS module 227, and NFC module 228 (e.g., communication processor corresponding to the cellular module 221 and Wifi processor corresponding to the Wifi module 223) can be configured in an SoC.

The RF module 229 can transmit and receive data such as an RF signal. For example, the RF module 229 may include a transceiver, power amp module (PAM), frequency filter, or low noise amplifier (LNA). For example, the RF module 229 may further include a conductive part or wire for transmitting and receiving an electromagnetic wave in a wireless communication environment. Although the cellular module 221, Wifi module 223, BT module 225, GPS module 227, and NFC module 228 are shown to share an RF module 229, according to an embodiment, at least one of the cellular module 221, Wifi module 223, BT module 225, GPS module 227, and NFC module 228 can transmit or receive an RF signal through at least one separate RF module.

The communication module 220 according to various embodiments of the present invention can form a communication channel with an external device, and receive user context information related to a user state from the external device.

SIM cards 225_1∼N may include a subscribe identity module, and they can be inserted into slots 2241∼N formed at specific locations of the electronic device 200. The SIM cards 225_1∼N may include unique identification information (e.g., integrated circuit card identifier (ICCID)) or subscriber information (e.g., international mobile subscriber identity (IMSI)).

The memory 230 (e.g., memory 130 of Figure 1) may include an internal memory 232 or an external memory 234. For example, the internal memory 232 may include at least one of a volatile memory such as a dynamic RAM (DRAM), static RAM (SRAM), synchronous dynamic RAM (SDRAM)), or a non-volatile memory such as a one time programmable ROM (OTPROM), programmable ROM (PROM), erasable and programmable ROM (EPROM), electrically erasable and programmable ROM (EEPROM), mask ROM, flash ROM, NAND flash memory, and NOR flash memory.

According to an embodiment, the internal memory 232 may be a solid state drive (SSD). The external memory 234 may further include a flash drive such as a compact flash (CF), secure digital (SD), micro secure digital (Micro-SD), mini secure digital (Mini-SD), extreme digital (xD), or Memory Stick. The external memory 234 can be connected functionally with the electronic device 200 through various interfaces. According to an embodiment, the electronic device 200 may further include a storage device (or storage medium) such as a hard disk drive.

The memory 230 according to various embodiments of the present invention can store previously obtained user context information. The memory 230 can store GUI configuration information configured based on the user context information.

The sensor module 240 can measure a physical quantity, detect an operating state of the electronic device 200, and convert measured or detected information to an electric signal. For example, the sensor module 240 may include at least one of a gesture sensor 240A, gyro sensor 240B, pressure sensor 240C, magnetic sensor 240D, acceleration sensor 240E, grip sensor 240F, proximity sensor 240G, color sensor 240H (e.g., RGB (Red, Green, Blue) sensor), biometric sensor 240I, temperature/humidity sensor 240J, illumination sensor 240K, or ultra violet (UV) sensor 240M. Additionally or substitutively, the sensor module 240 may include an E-nose sensor (not shown), electromyography sensor (EMG sensor, not shown), electroencephalogram sensor (EEG sensor, not shown), electrocardiogram sensor (ECG sensor, not shown), infrared sensor (IR sensor, not shown), iris sensor (not shown), or fingerprint sensor (not shown). The sensor module 240 may further include a control circuit for controlling at least one sensor included in the sensor module 240.

The input device 250 may include a touch panel 252, pen sensor 254, key 256, or ultrasonic input device 258. For example, the touch panel 252 can detect a touch input by using at least one method of electrostatic, pressure sensitive, infrared, or ultrasonic methods. The touch panel 252 may further include a control circuit. In case of an electrostatic method, a physical contact or proximity can be identified. The touch panel 252 may further include a tactile layer. In this case, the touch panel 252 can provide a tactile response for a user.

For example, the pen sensor 254 can be configured in an identical or similar method to the method of receiving a user's touch input or by using a separate recognition sheet. For example, the key 256 may include a physical button, optical key, or keypad. The ultrasonic input device 258 detects a sonic wave through a microphone (e.g., microphone 288) in the electronic device 200 by using an input tool generating an ultrasonic signal, and it can recognize a wireless signal. According to an embodiment, the electronic device 200 can receive a user input from an external device (e.g., computer or server) connected to the electronic device 200 by using a communication module 220.

The input device 250 according to various embodiments of the present invention can receive an input related to user context information from the user of the electronic device 200. For example, a user's emotional state or GUI configuration information to be set by a user can be received from the user.

The display 260 (e.g., display 150 of Figure 1) may include a panel 262, hologram device 264, or projector 266. For example, the panel 262 may be configured with a liquid-crystal display (LCD) or an active-matrix organic light-emitting diode (AMOLED). For example, the panel 262 can be configured in a flexible, transparent, or wearable form. The panel 262 can be integrated with the touch panel 252 in a single module. The hologram device 264 can show a stereo image in the air by using the interference of the light. The projector 266 can display an image by projecting the light on a screen. For example, the screen may be located in the electronic device 200 or at the outside of the electronic device 200. According to an embodiment, the display 260 may further include a control circuit for controlling the panel 262, hologram device 264, or projector 266.

The display 260 according to various embodiments of the present invention can display a configured GUI.

For example, the interface 270 may include a high-definition multimedia interface (HDMI) 272, universal serial bus (USB) 274, optical interface 276, or D-subminiature (D-SUB) 278. For example, the interface 270 may include a communication interface 160 shown in Figure 1. Additionally or substitutively, the interface 270 may include a mobile high-definition link (MHL) interface, secure Digital (SD) card/multi-media card (MMC) interface, or infrared data association (IrDA) standard interface.

The audio module 280 can convert a sound and an electric signal interchangeably. For example, at least one component of the audio module 280 may be included in the input/output interface 140 shown in Figure 1. For example, the audio module 280 can process input/output sound information output through the speaker 282, receiver 284, earphone 286, or microphone 288.

According to an embodiment, the camera module 291 captures a still image and a video, and it may include at least one image sensor (e.g., front sensor or rear sensor), lens (not shown), image signal processor (ISP, not shown), or flash light (e.g., LED or xenon lamp, not shown).

The power management module 295 can manage the power of the electronic device 200. Although not shown in the drawings, the power management module 295 may include a power management integrated circuit (PMIC), charger integrated circuit (charger IC), or battery/fuel gauge).

For example, the PMIC can be integrated into an IC or SoC semiconductor. The charging method can be distinguished between a wired charging method and a wireless charging method. The charger IC can charge a battery and prevent a supply of overvoltage or overcurrent from a charger. According to an embodiment, the charger IC may be used for at least one of the wireless charging method and the wired charging method. For example, a magnetic resonance method, magnetic induction method, or electromagnetic wave method can be used as the wireless charging method, and additional circuits for the wireless charging such as a coil loop, resonance circuit, or rectifier can be further included.

For example, the battery gauge can measure a residual amount, voltage, current, or temperature of the battery 296. The battery 296 can store or generate an electric power, and supply the electric power to the electronic device 200 by using the stored or generated electric power. For example, the battery 296 may include a rechargeable battery or a solar battery.

The indicator 297 can display a specific state of the electronic device 200 or a part of the electronic device 200 (e.g., AP 210) such as a booting state, messaging state, or charging state. The motor 298 can convert an electric signal to a mechanical vibration. Although not shown in the drawings, the electronic device 200 may include a processing device for supporting a mobile TV (e.g., GPU). For example, the processing device for supporting a mobile TV can process media data following the standards of digital multimedia broadcasting (DMB), digital video broadcasting (DVB), or media flow.

Each of the above components of the electronic device can be configured with one or more components, and the name of the corresponding component may differ according to the type of the electronic device. The electronic device according to the present disclosure can be configured with at least one of the above components, some of the components can be omitted from the electronic device, or other components can be further included in the electronic device. Further, some of the components of the electronic device can be combined into an entity, and functions of the corresponding components before combining can be executed in the same way.

The term "module" used in the present invention may mean a unit including at least one of hardware, software, or firmware. For example the "module" can be used interchangeably with the terms of a unit, logic, logical block, component, or circuit. The "module" may be a minimum unit configured in a body or a part of the unit. The "module" may be a minimum unit performing at least one function. The "module" can be configured in a mechanical form or an electronical form. For example, the "module" according to the present disclosure may include at least one of an application-specific integrated circuit (ASIC) chip, field-programmable gate arrays (FPGAs), or programmable-logic device for executing certain operations, which are well known already or will be developed in future.

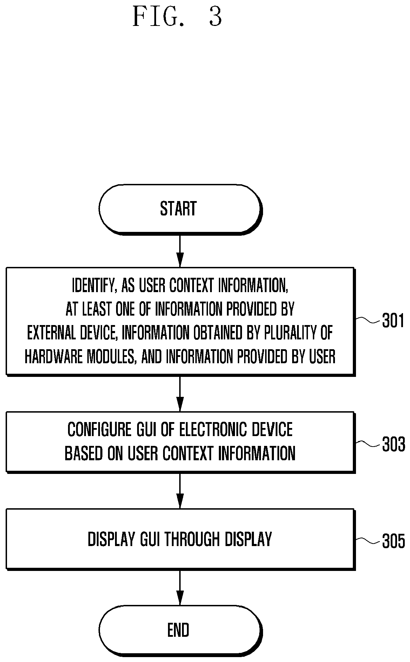

Figure 3 is a flowchart illustrating an operation of providing a graphic user interface for a user according to various embodiments of the present invention.

At operation 301, the electronic device 200 identifies, as user context information, at least one of information provided by an external device, information obtained by a plurality of hardware modules, and information provided by a user. The user context information may be related to the current state of the user or the current situation of the user.

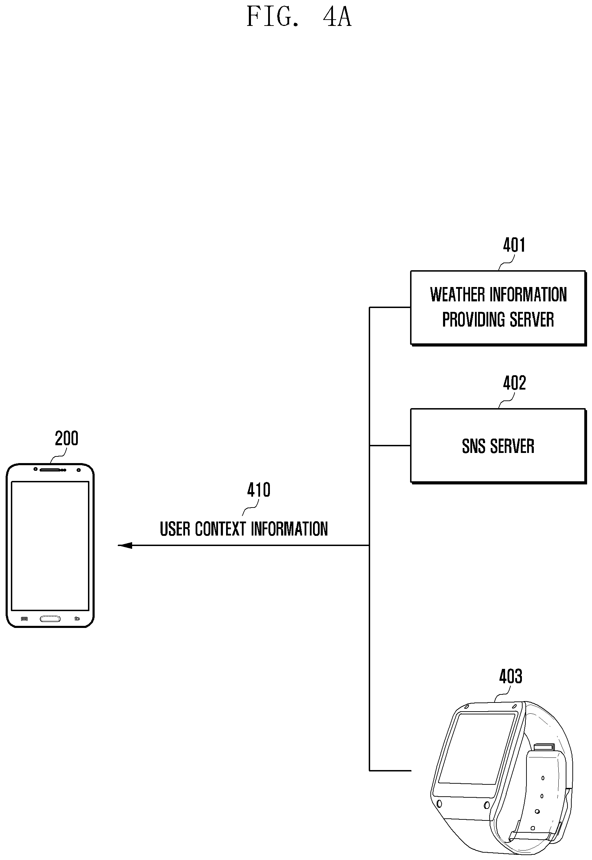

The electronic device 200 according to various embodiments of the present invention can identify information provided by an external device as user context information. For example, the external device may include all the devices connectable with the electronic device 200 through a communication module 200, such as a weather information providing server, social network service (SNS) server, and wearable device. The electronic device 200 can be connected to an external device through the communication module 220 and identify information received from the external device as user context information. With reference to Figure 4a, the electronic device 200 can be connected to an information providing server 401 through the communication module 220 and receive the current weather information from the information providing server 401. The electronic device 200 can identify the weather as user context information 410. Further, the electronic device 200 can be connected to an SNS server 402 through the communication module 220 and identify social media data received from the SNS server 402 as user context information 410. The social media data received from the SNS server 402 may be a bulletin board message posted at the SNS server 402 such as a tweet of Tweeter or a bulletin board message of Facebook. The electronic device 200 can identify a user schedule (e.g., birthday and wedding anniversary) included in the social media data or information related to a current emotional state of a user (e.g., current feeling of a user) as user context information 410. Further, the electronic device 200 can connect to a wearable device 403 through the communication module 220 and identify information received from the wearable device 403 as user context information 410. The electronic device 200 can identify information indicating the current user situation such as information of a user's heartrate state received from the wearable device 403 and information of the current user location as user context information 410. The electronic device 200 according to various embodiments of the present invention is not limited to the above embodiments, and it can identify information of a user situation received from various external devices as user context information 410.

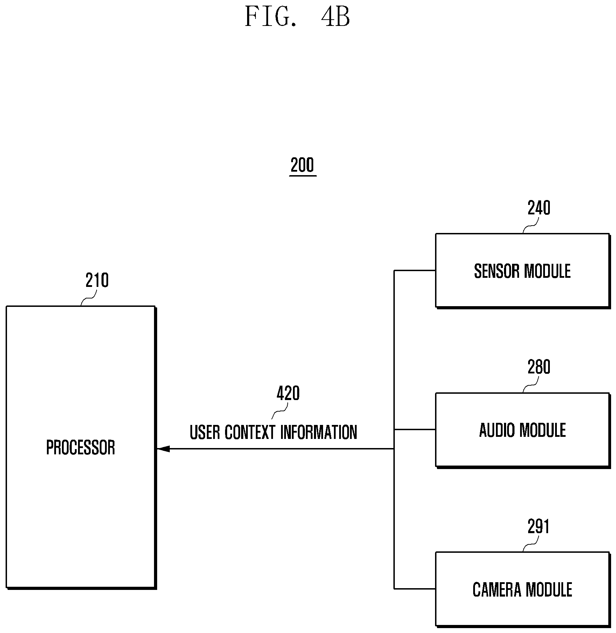

The electronic device 200 according to various embodiments of the present invention can identify information obtained by a plurality of hardware modules included in the electronic device 200 as user context information. The plurality of hardware modules may mean each module shown in Figure 2. The electronic device 200 can measure a user state by using the hardware modules and identify information of the measured result as user context information. With reference to Figure 4b, the electronic device 200 can measure an air pressure of a user's surroundings by using a pressure sensor 240C, and it can collect user context information 420 indicating the pressure measured by the pressure sensor 240C. As another example, the electronic device 200 can measure a biological state of a user by using a biometric sensor 240I, and it can collect user context information 420 indicating the biological state measured by the biometric sensor 240I. As another further example, the electronic device 200 can measure a temperature/humidity state of a user's surroundings by using a temperature/humidity sensor 240, and it can collect user context information 420 indicating the temperature/humidity information measured by the temperature/humidity sensor 240. As another further example, the electronic device 200 can measure an illumination state of a user's surroundings by using an illumination sensor 240K, and it can collect user context information 420 indicating the illumination information measured by the illumination sensor 240K. As another further example, the electronic device 200 can measure an ultraviolet state of a user's surroundings by using a UV sensor 240M, and it can collect user context information 420 indicating the ultraviolet information measured by the UV sensor 240M. As another further example, the electronic device 200 can measure a noise state of a user's surroundings by using a microphone 288 included in the audio module 280, and it can collect user context information 420 indicating the noise information measured by the microphone 288. As another further example, the electronic device 200 can perform a face recognition and an iris recognition by using a camera module 291, and it can collect user context information 420 related to the user's face and iris from the camera module 291.

The electronic device 200 according to various embodiments of the present invention can identify information of a user state provided by the user as user context information. For example, the electronic device 200 can receive information of the current user's emotion input by the user, and it can identify the input information as user context information.

At operation 303, the electronic device 200 configures a graphic user interface (GUI) of the electronic device 200 based on the received user context information.

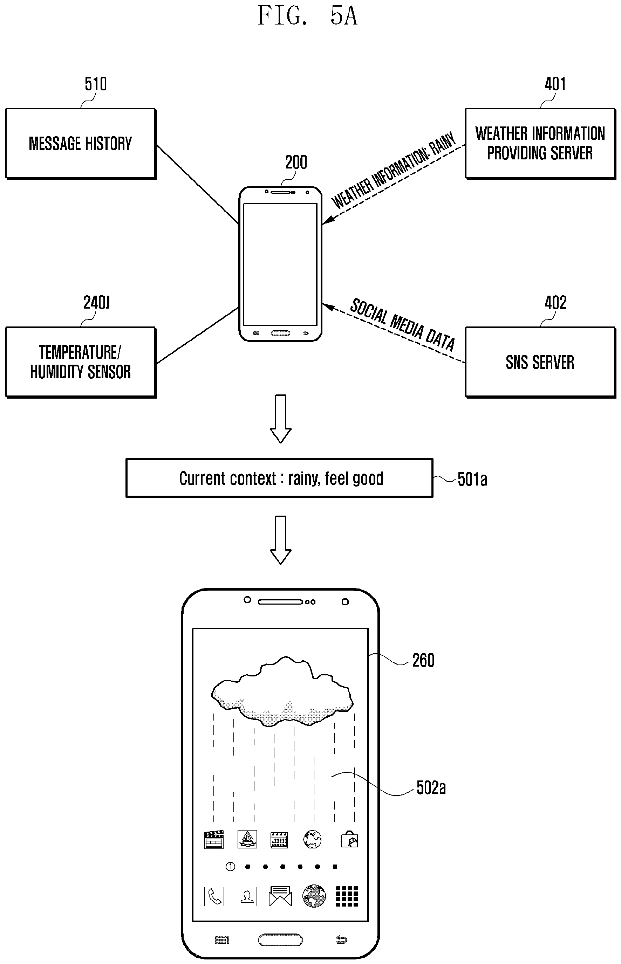

The electronic device 200 according to various embodiments of the present invention can identify a user state by analyzing the user context information. With reference to Figure 5a, the electronic device 200 can obtain the current weather information from an information providing server 401 as user context information, and it can determine that the current weather state 501a is a rainy state by analyzing the weather information. Further, the electronic device 200 can obtain the current temperature/humidity information from a temperature/humidity sensor 240 as user context information, and it can determine a current humidity state by analyzing the temperature/humidity information. Further, the electronic device 200 can obtain information related to the current user's emotional state (e.g., very cheerful state of a user) from social media data (e.g., tweet of Tweeter or bulletin board message of Facebook) posted at an SNS server 402 as user context information, and it can identify the current emotional state 501a of a user by analyzing the social media data.

The electronic device 200 according to various embodiments of the present invention can configure a GUI based on the identified user state. The GUI can be configured with at least one of a background image, animation, icon, widget, character font, scroll, and soft key of the electronic device. The electronic device 200 can configure a GUI based on the identified user state. With reference to Figure 5a, if a very cheerful state 501a of a user is identified by the electronic device when it is rainy, the electronic device 200 can configure a GUI 502a by setting a photo of rain as a background image and disposing a blue tone icon related to the rain on the background image. Further, the GUI 502a of the electronic device 200 can be configured by setting a character font or other GUI item to a yellow tone color in order to indicate the cheerful state of a user.

The electronic device 200 according to various embodiments of the present invention can store the obtained user context information, and it can configure a GUI based on the stored user context information and newly obtained user context information. With reference to Figure 5a, the electronic device 200 can determine that the user has entered a cheerful state by analyzing a history of messages stored in a message application or social media data posted at the SNS server 402. In this case, if the electronic device 200 determines later that the weather state is a rainy state, the electronic device 200 can analyze or estimate that the user is in a cheerful state and configure the GUI 502a of the electronic device 200 based on the above analysis.

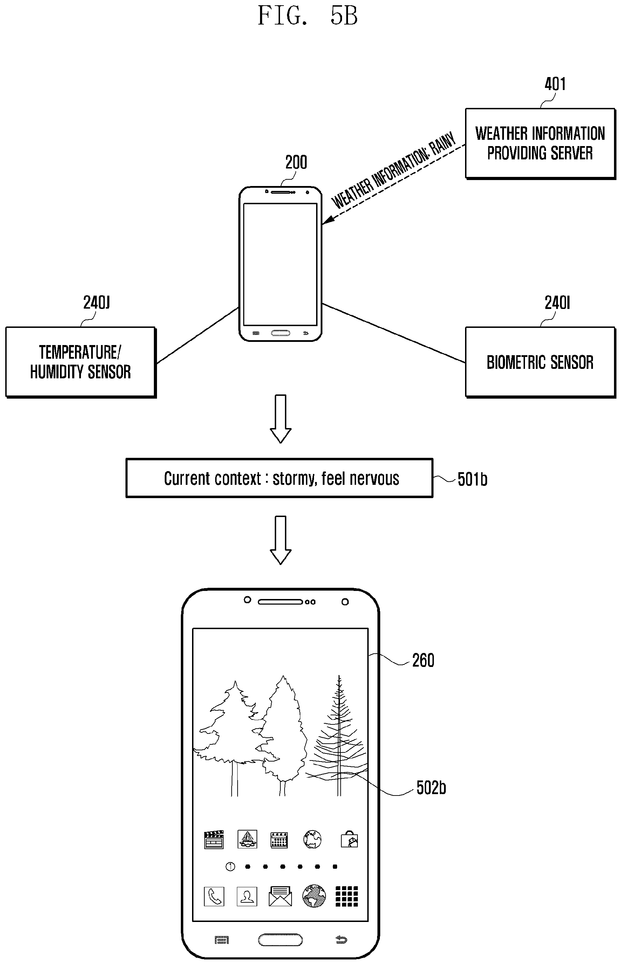

With reference to Figure 5b, the electronic device 200 according to various embodiments of the present invention can configure various GUIs based on the user context information. For example, the electronic device 200 can obtain the current weather information from the information providing server 401 as user context information, and it can determine that the current weather state 501b is a stormy state by analyzing the weather information. Further, the electronic device 200 can obtain the current temperature/humidity information from the temperature/humidity sensor 240J as user context information, and it can determine the current humidity by analyzing the temperature/humidity information. Further, the electronic device 200 can obtain information related to a heartrate of a user as user context information from a biometric sensor 240I such as a heartrate sensor, and it can determine the current heartrate state 501b of the user by analyzing the heartrate information. The electronic device 200 can configure a GUI based on the identified user state. For example, if the electronic device 200 identifies that the current weather state is a stormy state and the heartrate of the user is increased from a normal state at operation 501b, the electronic device 200 can configure a GUI 502b by setting a photo of a forest or a photo of bright sky as a background image and disposing a green tone icon giving a stable feeling on the background image in order to provide a GUI giving a stable feeling for the user.

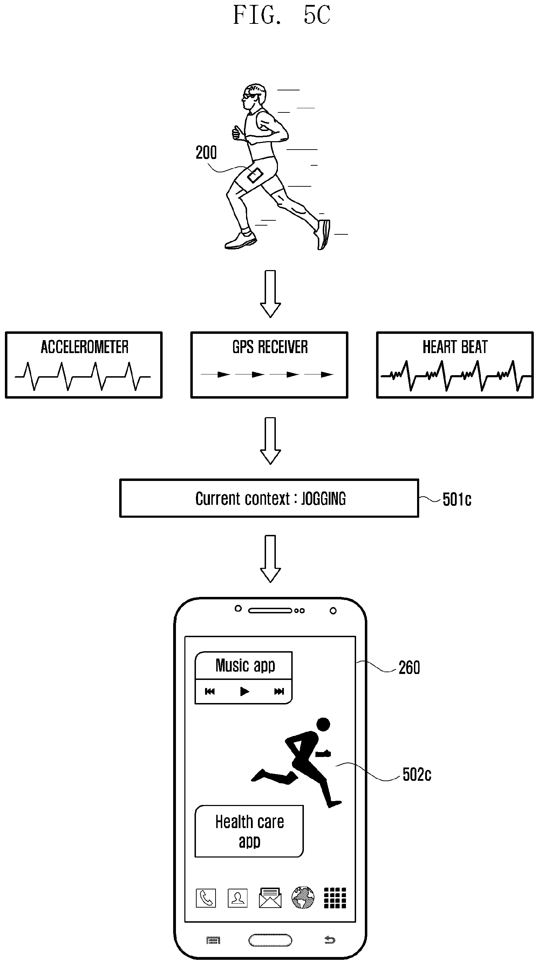

With reference to Figure 5c, the electronic device 200 according to various embodiments of the present invention can configure various GUIs based on the user context information. For example, the electronic device 200 can obtain the current acceleration information from an acceleration sensor 240E. Further, the electronic device 200 can obtain the current location information from a GPS module 227 as user context information, and it can identify a change in location if the location of the user changes according to the time. Further, the electronic device 200 can obtain information related to a heartrate of a user from a biometric sensor 240I (e.g., heartrate sensor) as user context information. The electronic device 200 can identify that the user is currently in a jogging state by analyzing the obtained acceleration information, GPS location information, and heartrate information at operation 501c. The electronic device 200 can configure a GUI based on the identified user state. For example, if the jogging state of the user is identified by the electronic device 200 at operation 501c, the electronic device 200 can configure a GUI 502c by setting the background with a sport theme and disposing a music application or healthcare application on the background image in order to provide a GUI optimized for the jogging state.

The electronic device 200 according to various embodiments of the present invention can obtain the user context information in predetermined time intervals, and it can modify the GUI configuration based on the obtained user context information. For example, the GUI configuration can be modified by a user or a manufacturer in 12 hour intervals. If the electronic device 200 configured the user context information at 8 o'clock in the morning, the electronic device 200 can obtain user context information from at least one of an external device, each hardware module of the electronic device 200, and the user at 8 o'clock in the evening, configure a GUI based on the user context information, and change the previous GUI to a newly configured GUI.

At operation 305, the electronic device 200 can display the configured GUI through a display 260. The electronic device 200 according to various embodiments of the present invention can store the configured GUI in a memory 230 and apply the configured GUI according to a specific situation, if the specific situation arises again later. The electronic device 200 according to various embodiments of the present invention can transmit user context information and the GUI information configured according to the user context information to another electronic device. For example, electronic device 200 can transmit the weather information (e.g., rainy state) as a first user context information, a user's emotional information (e.g., cheerful state of a user when it is rainy) as a second user context information, and the GUI information configured according to the user context information to a GUI sharing server or an SNS server so that a plurality of electronic devices can share the GUI.

While the present invention has been shown and described with reference to various embodiments thereof, it will be understood by those skilled in the art that various changes in forms and details may be made therein without departing from the spirit and scope of the present invention as defined by the appended claims and their equivalents.

## Claims

1. An electronic device comprising:
a plurality of hardware modules comprising a display; and
a processor configured to display a graphic user interface (GUI) in the display by recognizing, as user context information, at least one of information provided by an external device, information obtained by the plurality of hardware modules, and information provided by a user, and by configuring the GUI of the electronic device based on the user context information

2. The electronic device of claim 1, wherein the processor connects to the external device through a communication channel and receives the user context information from the external device.

3. The electronic device of claim 1, wherein the processor collects the user context information by using the plurality of hardware modules.

4. The electronic device of claim 1, further comprising:
an input device configured to receive an input for the user context information from a user of the electronic device.

5. The electronic device of claim 1, wherein the processor identifies a user state by analyzing the obtained user context information and configures the GUI based on the identified user state.

6. The electronic device of claim 1, further comprising:
a memory configured to store previously obtained user context information,
wherein the processor identifies the user state by analyzing the stored user context information and the obtained user context information, and configures the GUI based on the identified user state.

7. The electronic device of claim 1, wherein the processor modifies a configuration of the GUI by obtaining the user context information in predetermined time intervals.

8. The electronic device of claim 1, further comprising:
a memory configured to store the configuration of the GUI.

9. The electronic device of claim 1, wherein the processor controls transmission of the user context information and GUI information configured based on the user context information to another electronic device.

10. The electronic device of claim 1, wherein the GUI is configured with at least one of a background image, animation, icon, widget, character font, scroll, and soft key of the electronic device.

11. A method for providing a graphic user interface (GUI) in an electronic device, the method comprising:
identifying, as user context information, at least one of information provided by an external device, information obtained by a plurality of hardware modules, and information provided by a user;
configuring the GUI of the electronic device based on the user context information; and
displaying the GUI through a display.

12. The method of claim 11, wherein identifying comprises:
connecting to the external device through a communication module; and
receiving the user context information from the external device.

13. The method of claim 11, wherein identifying comprises:
collecting the user context information by using the plurality of hardware modules.

14. The method of claim 11, wherein identifying comprises:
receiving an input for the user context information from a user of the electronic device.

15. The method of claim 11, wherein configuring the GUI comprises:
determining a user state by analyzing the obtained user context information; and
configuring the GUI based on the identified user state.

16. The method of claim 11, wherein the electronic device stores previously obtained user context information, and configuring the GUI comprises:
determining a user state by analyzing the stored user context information and the obtained user context information; and
configuring the GUI based on the identified user state.

17. The method of claim 11, further comprising:
modifying a configuration of the GUI by obtaining the user context information in predetermined time intervals.

18. The method of claim 11, further comprising:
storing a configuration of the GUI.

19. The method of claim 11, further comprising:
transmitting the user context information and GUI information configured based on the user context information to another electronic device.

20. The method of claim 11, wherein the GUI is configured with at least one of a background image, animation, icon, widget, character font, scroll, and soft key of the electronic device.
